# EUROPEAN PATENT APPLICATION

(11) **EP 0 936 809 A2**
(43) Date of publication of application: **18.08.1999**
(21) Application number: 99102100.7
(22) Date of filing: 02.02.1999
(51) Int. Cl.: H04N 5/335

(54) **Image sensing apparatus and driving method thereof**

(30) Priority: 12.02.1998 JP 2936898
(71) Applicant: SONY CORPORATION, Tokyo (JP)
(72) Inventor: Iizuka, Tetsuya, Shinagawa-ku, Tokyo (JP)
(74) Representative: MÜLLER & HOFFMANN Patentanwälte

(57) **Abstract**

Use of a half of packets of the vertical CCD register for signal A and the residual half for signal B to obtain two image information items results in reduction to a half vertical resolution, and so, to prevent the reduction, in an electronic still camera which uses a general CCD image sensing element and a mechanical shutter for shielding the incident light irradiated onto the light receiving plane of the image sensing element, the start of the first accumulation time A of a photodiode of the CCD image sensing element is determined by shutter operation of an electronic shutter or a mechanical shutter, the end of the first accumulation time A and the start of the second accumulation time B are determined by read operation of the signal charge from the photodiode to the vertical CCD register, the end of the second accumulation time B is determined by the shutter operation of the mechanical shutter, and the second signal charge corresponding to the second accumulation time B is accumulated and held in the photodiode until the first signal charge corresponding to the first accumulation time A is transferred and the electric charge packet of the vertical CCD register becomes empty.

## Description

### BACKGROUND OF THE INVENTION

### Field of the Invention

This invention relates to an image sensing apparatus and a method for driving thereof and more particularly to an image sensing apparatus which employs a so-called dynamic range CCD (Charge Coupled Device) image sensing element having a wide dynamic range to the light input and a method for driving thereof.

### Description of Related Art

A method in which two image information items different in accumulation time are obtained from an solid-state image sensing element has been known as a method for expanding apparently the dynamic range of an image sensing apparatus which used a solid-state image sensing element. For example, the sensitivity is satisfied with a signal charge A having a long accumulation time, and the light quantity information of an area saturated with the signal charge A is obtained from a signal charge B having a short accumulation time, and these signal charges A and B are derived as two image information.

A method in which two image information items A and B are obtained with changing the accumulation time in every field or frame has been known as the conventional method for obtaining two image information items A and B different in accumulation time from a solid-state image sensing element.

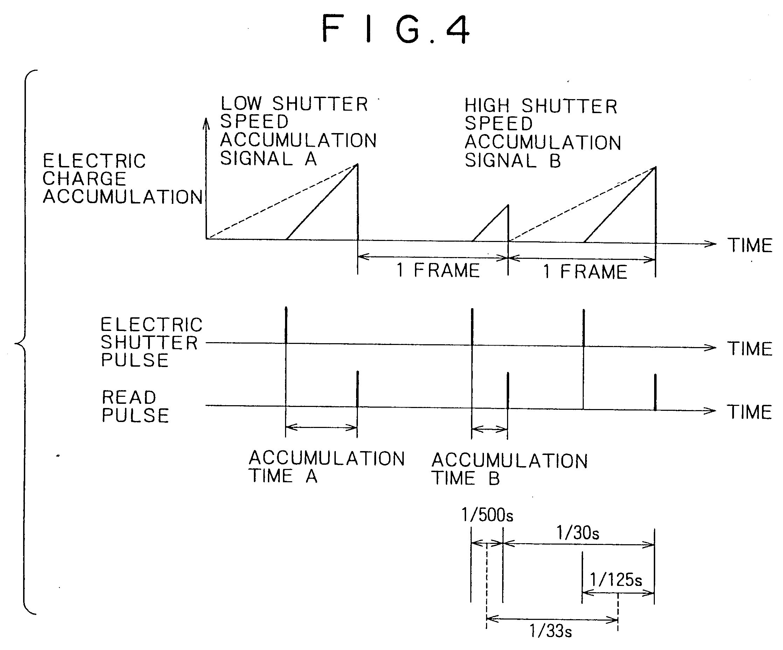

In a CCD image sensing element, the electronic shutter pulse for weeping a signal charge accumulated in a photoelectric conversion element, for example, to a substrate and the read pulse for reading out a signal charge accumulated in the photoelectric conversion elements to a vertical CCD register control the accumulation time. Such method in which the accumulation time is controlled using the electronic shutter pulse and read pulse is disadvantageous in that the accumulation times of two image information items A and B are distant each other as obvious in FIG. 4.

In the case shown in FIG. 4 with broken lines, accumulation timings of two image information items A and B are located close each other, but such close accumulation timing seldom occurs in an electronic still camera. The shutter speed (equivalent to the accumulation time A) used generally in an electronic still camera is generally shorter than 1 frame time (frame period). For example, currently a frame period is at shortest 1/30 sec., but the lower limit of the shutter speed which is easy to be used for a still camera is 1/125 sec.

In FIG. 4, it is assumed that the frame period is 1/30 sec., the accumulation time A is 1/125 sec., and the accumulation time B is 1/500 namely (1/4) × (1/125). Then the time difference between centers of accumulation times A and B is approximately 1/33 sec. Therefore, the far distance between the accumulation times A and B results in blur due to so-called camera shake, that is shaking of the camera itself (shaking of hands of a user), or motion of an object, and causes the difficulty in picture taking.

As a conventional another example for solving such problem, a full pixel read type CCD image sensing element in which the signal charge in effective period in the vertical direction is read, a short exposure is provided again in a vertical blanking period for photoelectric conversion, the signal charge is read again, two signal outputs of the signal charge with longer exposure and the signal charge with shorter exposure are added using a signal process system has been known (for example, refer to a literature; Komobuchi, H., "1/4 Inch NTSC Format Hyper-D Range IL-CCD" 1995 IEEE Workshop on Charge-Coupled Devices and Advanced Image Sensors, Apr. 1995)

However, because the CCD image sensing element in accordance with the conventional example having the structure as described herein above uses a half of the packet of the vertical CCD register as the signal A and uses the residual half as the signal B, the original resolution of the CCD image sensing element is reduced to a half. Therefore, such CCD image sensing element is not suitable for the electronic still camera, for which the resolution is important. Naturally, if the number of packets (the number of pixels) of the vertical CCD register is doubled, the problem of the reduced resolution is solved, but, in this case, the doubled packets causes a new problem that involved electric charge of the vertical CCD register decreases seriously, and this method is not practical.

### SUMMARY OF THE INVENTION

This invention was accomplished in view of the above-mentioned problem, and it is an object of the present invention to provide an image sensing apparatus which is capable of obtaining two image information items having different accumulation time and accumulation periods adjacent each other.

An image sensing apparatus of the present invention comprises a plurality of photoelectric conversion elements, a solid-state image sensing element having an electric charge transfer unit for transferring signal charge read from these photoelectric conversion elements, light shielding means for shielding an incident light irradiated onto the light receiving plane of the solid-state image sensing element, first driving means having a function that the start of the first accumulation time in the photoelectric conversion elements is determined by electronic shutter operation of the solid-state image sensing element or unshielding operation of the light shielding means, the end of the first accumulation time and the start of the second accumulation time are determined by read operation of the signal charge supplied from the photoelectric conversion elements to the electric charge transfer unit, and the end of the second accumulation time is determined by light shielding start operation of the light shielding means, and second driving means having a function that the second signal charge corresponding to the second accumulation time is accumulated and held in the photoelectric conversion elements until the first signal charge corresponding to the first accumulation time is transferred and the electric charge packet of the electric charge transfer unit becomes empty.

A driving method of an image sensing apparatus of the present invention comprises a plurality of photoelectric conversion elements, a solid-state image sensing element having an electric charge transfer unit for transferring signal charge read from these photoelectric conversion elements, and light shielding means for shielding the incident light irradiated onto the light receiving plane of the solid-state image sensing element, wherein the start of the first accumulation time in the photoelectric conversion elements is determined by electronic shutter operation of the solid-state image sensing element or light unshielding operation of the light shielding means, the end of the first accumulation time and the start of the second accumulation time are determined by read operation of signal electric charge from the photoelectric conversion elements to the electric charge transfer unit, the end of the second accumulation time is determined by light shielding start operation of the light shielding means, and the second signal charge corresponding to the second accumulation time is accumulated and held in the photoelectric conversion elements until the first signal charge corresponding to the first accumulation time is transferred and the electric charge packet of the electric charge transfer unit becomes empty.

In the image sensing apparatus or driving method having the structure described herein above, by giving an electronic shutter pulse to a semiconductor substrate on which the solid-state image sensing elements are integrated, the electronic shutter operation for sweeping the signal charge accumulated in the photoelectric conversion elements to the substrate is performed, and by giving a read pulse to the read gate of the solid-state image sensing element, read operation for reading out the signal charge accumulated in the photoelectric conversion elements to the electric charge transfer unit is performed.

On the other hand, in each photoelectric conversion element, an accumulation operation of a signal charge starts from the time point when the light signal is irradiated onto the light receiving plane of the solid-state image sensing element in response to light unshielding operation of the shielding means namely mechanical shutter operation or from the time point when the signal charge is swept completely from the photoelectric conversion elements to the substrate in response to electronic shutter operation, and the accumulation operation of the signal charge ends at the time point when read of the signal charge from the photoelectric conversion elements to the electric charge transfer unit due to the read operation is completed, and from that time point the next accumulation operation of the signal charge starts.

The start of the first accumulation time in the photoelectric conversion is determined by electronic shutter operation of the solid-state image sensing element or light unshielding operation of the shielding means, and the end of the first accumulation time and the start of the second accumulation time are determined by read operation of the signal charge supplied from the photoelectric conversion elements to the electric charge transfer unit, thereby the first and second accumulation-periods come close each other. Further, the end of the second accumulation time is determined by light shielding start operation of the light shielding means, thereby different accumulation times are set as the first and second accumulation times.

Until the first signal charge corresponding to the first accumulation time is transferred and the electric charge packet of the electric charge transfer unit becomes empty, the second signal charge corresponding to the second accumulation time is accumulated and held in the photoelectric conversion element, thereby the first image information based on the signal charge of the first accumulation time and the second image information based on the signal charge of the second accumulation time are derived in the order as the output of the solid-state image sensing element.

### BRIEF DESCRIPTION OF THE DRAWINGS

FIG. 1 is a diagram for illustrating a schematic structure of an electronic still camera to which the present invention is applied.
FIG. 2 is a diagram for illustrating a schematic structure of an interline transfer type CCD image sensing element.
FIG. 3 is a timing chart for describing operations of the present invention.
FIG. 4 is a timing chart for describing disadvantage of the conventional example.

### DETAILED DESCRIPTION OF THE PREFERRED EMBODIMENTS

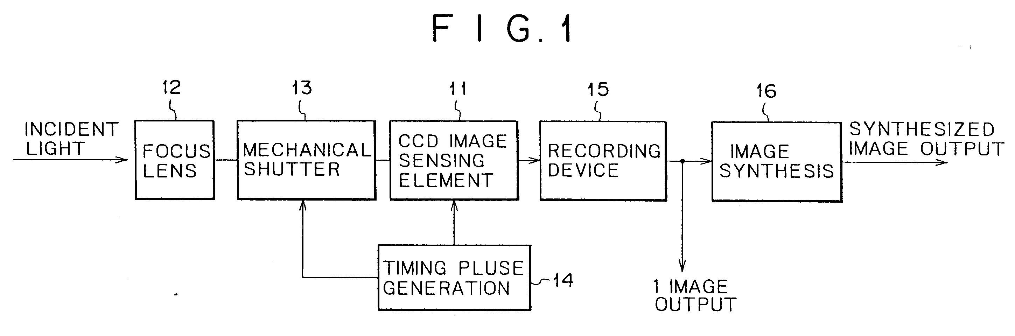

Preferred embodiments of the present invention will be described in detail hereinafter with reference to the drawings. FIG. 1 is a block diagram for illustrating schematic structure of an electronic still camera to which the present invention is applied.

A camera of the present invention uses a CCD image sensing element 11 as a image sensing device, and is provided at least with a focus lens 12 for focusing an incident light emitted from an object (not shown in the drawing) on a light receiving plane of the CCD image sensing element, a component for shielding the incident light irradiated onto the CCD image sensing element 11 such as a mechanical shutter 13, and a timing pulse generation circuit 14 for generating various timing pulses to drive the CCD image sensing element 11.

The camera is additionally provided with a recording device 15 for processing electrically output signals of the CCD image sensing element 11 and recording two image information items independently, and an image synthesis device 16 for synthetically processing two image information items recorded independently in the recording device 15, and structured so that one image information out of two image information items recorded independently in a memory medium 15 is sent out and a synthesized image information synthesized by the image synthesis device 16 is sent out. The recording device 15 and the image synthesis device 16 may not be combined to the camera.

In this example, the mechanical shutter 13 is used as a light shielding means for shielding the incident light irradiated onto the light receiving plane of the CCD image sensing element, however other shielding means other than the mechanical shutter may be used without restriction, and alternatively, for example, a liquid crystal shutter may be used.

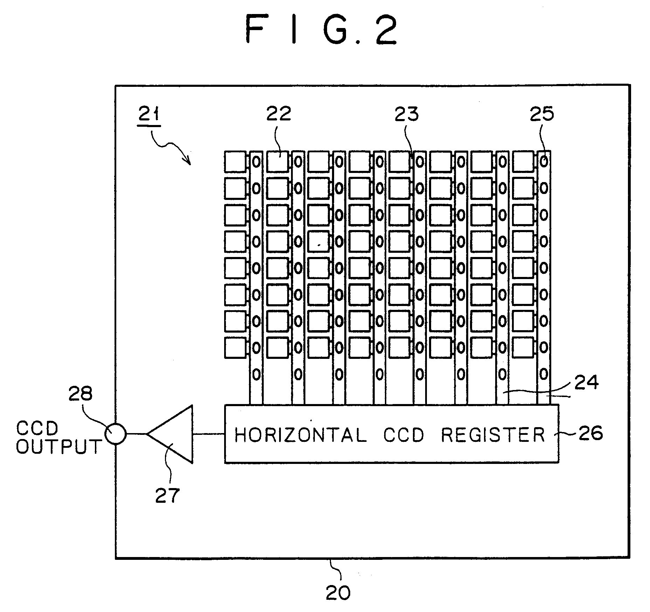

The CCD image sensing element 11 is a so-called full pixel reading type CCD image sensing element, which reads out signal charges of all the pixels at a time to a vertical CCD register, and a CCD image sensing element 11 having the number of electric charge packets of a vertical CCD register equal to or more than the number of photoelectric conversion elements is used. Herein, the electric packet means a unit which treats a group of signal charges equivalent to one signal component. One example of the structure of an interline transfer type CCD image sensing element is shown in FIG. 2.

In FIG. 2, an image sensing unit 21 comprises a plurality of photodiodes 22, namely photoelectric conversion elements, arranged in the form of two-dimensional matrix, and a plurality of vertical CCD registers 24, which are provided for each vertical line of the photodiodes, served for vertical transfer of signal charge read from photodiodes 22 through gates 23. The vertical CCD register 24 of this example has the number of electric charge packets 25 approximately equivalent to the number of photodiodes 22 as shown in FIG. 2.

On the ends of the transfer end side of the plurality of vertical CCD registers 24, a horizontal CCD register 26 is provided adjacent to and along the arrangement of the ends of the vertical CCD registers 24. The horizontal CCD register 26 transfers horizontally one line signal charge shifted from the plurality of vertical CCD registers 24 through line shift operation.

On the end of the transfer end side of the horizontal CCD register 26, an electric charge detection amplifier 27 having, for example, the floating diffusion amplifier structure for detecting signal electric charge transferred successively from the horizontal CCD registers 26 and converting it to signal voltage. The output voltage of the electric charge detection amplifier 27 is derived as a CCD output through an output terminal 28.

The above-mentioned components are integrated on a semiconductor substrate (not shown in the drawing) in the form of an interline transfer type CCD image sensing element 20. The CCD image sensing element 20 having the structure described herein above performs various operations in response to various timing pulses such as electronic shutter pulse, read pulse, and vertical/horizontal transfer pulse supplied from the timing pulse generation circuit 14 shown in FIG. 1.

Electronic shutter operation that signal charge accumulated in the photodiodes 22 is swept to the substrate is performed in response to the electronic shutter pulse given to the semiconductor substrate, electric read operation that signal charge accumulated in the photodiodes 22 is read to the vertical CCD registers 24 is performed in response to the read pulse given to the read gates 23, and vertical/horizontal transfer operation of signal charge is performed in response to the vertical/horizontal transfer pulse given to the vertical CCD registers 24/horizontal CCD register 26.

The timing pulse generation circuit 14 for generating various timing pulses has a first driving means for determining the accumulation time of signal charge in the photodiodes 22 and second driving means for controlling the holding (accumulation) state of signal charge in the photodiodes 22.

In each photodiodes 22, accumulation of electric charge starts from the time point when the light receiving plane of a CCD image sensing element 20 starts to receive the incident light through the mechanical shutter 13 with unshielding operation (shutter operation) of the mechanical shutter 13 shown in FIG. 1 or from the time point when sweeping of signal charge from the photodiode 22 to the substrate with electronic shutter operation is completed, the accumulation of electric charge goes to an end at the time point when read of signal charge from the photodiode 22 to the vertical CCD register 24 in reading out operation is completed, and the next accumulation of electric charge starts from this time point.

In this embodiment, the case that the CCD image sensing element 20 having the number of photodiodes 22 approximately equal to the number of electric charge packets 25 of the vertical CCD registers 24 is used is described, however the CCD image sensing element 20 is by no means limited to the case, a CCD image sensing element having the number of photodiodes 22 twice the number of electric charge packets 25 of the vertical CCD registers 24 may be used in the present invention as long as the CCD image sensing element is an interline transfer type CCD element by using 1/2 photodiodes 22 in 1 frame or 1 field or by employing the structure in which 2 pixels of signal charge of the photodiodes 22 are added.

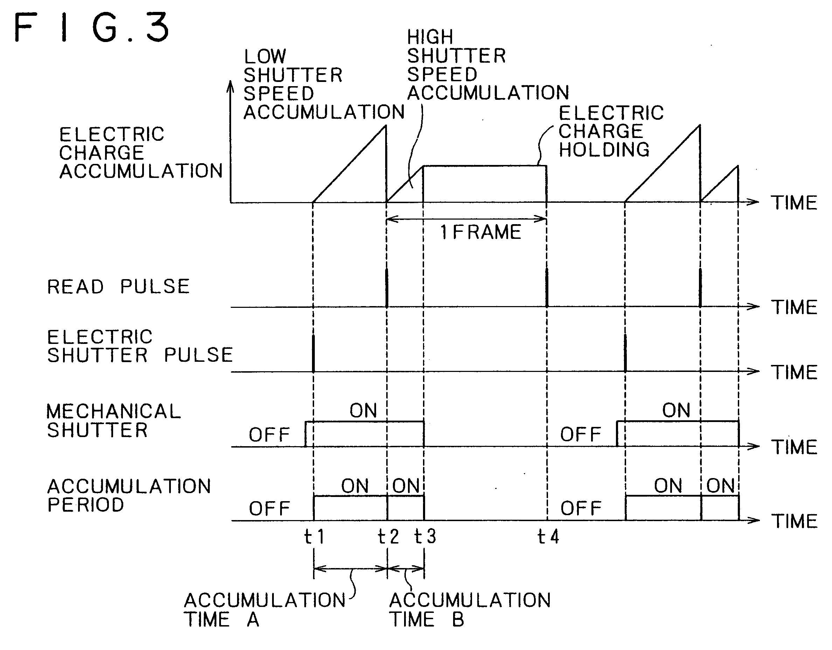

Next, operations of the interline transfer type CCD image sensing element 20 having the structure described herein above are described with reference to FIG. 2 and FIG. 3. In a timing chart shown in FIG. 3, operation timing of the CCD image sensing element 20, ON/OFF timing of the mechanical shutter 13, and accumulation of signal charge in a photodiodes 22 are shown respectively.

First, the mechanical shutter 13 is open before the time t1, and later the signal charge which has been accumulated in the photodiode 22 is reset at the time t1 in response to an electronic shutter pulse. In detail, the signal charge is discharged (swept) from the photodiode 22 to the substrate by applying an electronic shutter pulse on the substrate. Accumulation of signal charge to the photodiode 22 starts from the time point when the reset operation ends.

In detail, when the light signal starts to enter into the empty photodiode 22 through mechanical shutter 13, the signal charge is accumulated gradually with time in the photodiodes 22 due to photoelectric conversion effect. In response to a read pulse which is applied on the read gate 23 at the time t2, the read gate 23 opens, and the signal charge accumulated in the photodiode 22 is read to the vertical CCD register 24 through the read gate 23. When, the photodiode 22 becomes empty.

In the operation described herein above, the first accumulation time A is determined based on the time different between the time t2 and the time t1, the signal charge accumulated in the accumulation time A is accumulated in each electric packet 26 of the vertical CCD register 24.

The signal charge read to the vertical CCD register 24 in the accumulation time A is discharged as a voltage signal in the time period from the time t2 to time t4 from the CCD image sensing element 20 through the electric charge detection amplifier 27 by way of vertical charge transfer by the vertical CCD register 24 and by way of horizontal charge transfer by the horizontal CCD register 26, and the electric charge packet 26 of the vertical CCD register 24 becomes empty.

On the other hand, the photodiode 22 which has become empty at the time t2 starts to accumulate signal charge again because the mechanical shutter 13 is open. The accumulation is brought to an end at the time t3 when the mechanical shutter 13 is closed to shut out the light signal.

In the time period from the time t3 to the time t4, the mechanical shutter13 is closed, and the signal charge accumulated in the accumulation time B is held in the photodiode 22. A read pulse is applied on the read gate 23 at the time t4, and the signal charge held in the photodiode 22 is read to the vertical CCD register 24 through the read gate 23.

The signal charge accumulated in the accumulation time B and read to the vertical CCD register 24 is discharged as a voltage signal from the CCD image sensing element through the electric charge detection amplifier 27 by way of vertical electric charge transfer by the vertical CCD register 24 and by way of horizontal electric charge transfer by the horizontal CCD register 26 after the time t4.

In the series of operations described herein above, the signal charge accumulated in the electric charge packet 25 of the vertical CCD register 24, dark signal charge, and smear electric charge may be discharged by driving the vertical CCD register 24 just before the time t2. Alternatively, dark signal charge and smear electric charge accumulated in the packet of the vertical CCD register 24 may be discharged in the time period from the time point when the packet of the vertical CCD register 24 becomes empty just before the time t4 to the time point when the signal charge accumulated in the accumulation time B is read to the vertical CCD register 24.

In this example, the structure in which the signal charge accumulated in the longer accumulation time is obtained prior to the signal charge accumulated in the shorter accumulation time is employed, but alternatively, the signal charge accumulated in the shorter accumulation time may be obtained prior to the signal charge accumulated in the longer accumulation time. Because the time period from the time t1 to the time t2 is all determined with electric timing by obtaining the signal charge accumulated in the shorter accumulation time as described herein above, this method is advantageous in that the accumulation time is obtained precisely. As the result, error of individual accumulation time is reduced.

In the above-mentioned operation description, the accumulation is started at the time t1 by electronic shutter operation, but alternatively the accumulation is started by mechanical shutter operation (namely unshielding operation of the mechanical shutter 13) instead of electronic shutter operation. However, electronic shutter operation is advantageous in that accuracy of accumulation time setting is better.

Next, treatment of two image information items based on signal charges of the accumulation times A and B sent out from the CCD image sensing element 20 through the series of operations described herein above is described with reference to FIG. 1.

Two image information items are subjected to image signal processing in the recording device 15 and recorded independently in the recording medium. The independent recording of two image information items is advantageous in that usual signal processing is applied as it is, and two image information items are edited into desired image information at any time by image synthesis processing using a personal computer with aid of software.

Because usual signal processing is used, an electronic still camera which can be used with switching to usual image sensing and image sensing in accordance with the present invention is realized by combining the function of the present invention.

Preferably, two image information items recorded independently in the recording device 15 are synthesized by the image synthesis device 16 to form a one image information and the synthesized image information is sent out, and the image sensing result based on the function of the present invention is confirmed. In this case, simple processing can be applied because regular synthetic processing is performed later.

As described herein above, according to the present invention, by using the general solid-state image sensing element and the shielding means for shielding the incident light irradiated onto the light receiving plane of the image sensing element and by setting the driving timing of these components suitably, two image information items having different accumulation time with adjacent accumulation period are obtained without deterioration of vertical resolution.

## Claims

1. An image sensing apparatus comprising:
a plurality of photoelectric conversion elements;
a solid-state image sensing element having an electric charge transfer unit for transferring signal charge read from these photoelectric conversion elements;
light shielding means for shielding an incident light irradiated onto the light receiving plane of said solid-state image sensing element;
first driving means having a function that the start of the first accumulation time in said photoelectric conversion elements is determined by electronic shutter operation of said solid-state image sensing element or unshielding operation of said light shielding means, the end of said first accumulation time and the start of the second accumulation time are determined by read operation of the signal charge from said photoelectric conversion elements to said electric charge transfer unit, and the end of the second accumulation time is determined by light shielding start operation of said light shielding means; and
second driving means having a function that the second signal charge corresponding to said second accumulation time is accumulated and held in said photoelectric conversion elements until the first signal charge corresponding to said first accumulation time is transferred and the electric charge packet of said electric charge transfer unit becomes empty.

2. An image sensing apparatus as claimed in claim 1, further comprising recording means for recording independently first image information based on said first signal charge and second image information based on said second signal charge.

3. An image sensing apparatus as claimed in claim 2, further comprising image synthesis means for synthesizing the first and second image information items recorded by said recording means.

4. An image sensing apparatus as claimed in claim 1, wherein said first accumulation time is shorter than said second accumulation time.

5. An image sensing apparatus as claimed in claim 1, wherein the electric charge transfer unit is driven just before read operation of said first signal charge or said second signal charge to discharge unnecessary electric charge.

6. An image sensing apparatus as claimed in claim 1, wherein the number of electric charge packets in said electric charge transfer unit of said solid-state image sensing element is almost the same as that of said plurality of photoelectric conversion elements.

7. An image sensing apparatus as claimed in claim 1, wherein electric charge packets in said electric charge transfer unit of said solid-state image sensing element are fewer than said plurality of photoelectric conversion elements.

8. An image sensing apparatus as claimed in claim 1, wherein said solid-state image sensing element is of interline type.

9. A driving method of an image sensing apparatus comprising a plurality of photoelectric conversion elements, a solid-state image sensing element having an electric charge transfer unit for transferring signal charge read from these photoelectric conversion elements, and light shielding means for shielding the incident light irradiated onto the light receiving plane of said solid-state image sensing element,
wherein the start of the first accumulation time in said photoelectric conversion elements is determined by electronic shutter operation of said solid-state image sensing element or light unshielding operation of said light shielding means,
the end of said first accumulation time and the start of the second accumulation time are determined by read operation of signal electric charge from said photoelectric conversion elements to said electric charge transfer unit,
the end of said second accumulation time is determined by light shielding start operation of said light shielding means, and
the second signal charge corresponding to said second accumulation time is accumulated and held in said photoelectric conversion elements until the first signal charge corresponding to said first accumulation time is transferred and the electric charge packet of said electric charge transfer unit becomes empty.

10. A driving method of an image sensing apparatus as claimed in claim 9, wherein said first accumulation time is shorter than said second accumulation time.

11. A driving method of an image sensing apparatus as claimed in claim 9, wherein the electric charge transfer unit is driven just before read operation of said first signal charge or said second signal charge to discharge unnecessary electric charge.

12. A driving method of an image sensing apparatus as claimed in claim 9, wherein the number of electric charge packets in said electric charge transfer unit of said solid-state image sensing element is almost the same as that of said plurality of photoelectric conversion elements.

13. A driving method of an image sensing apparatus as claimed in claim 9, wherein electric charge packets in said electric charge transfer unit of said solid-state image sensing element are fewer than said plurality of photoelectric conversion elements.

14. A driving method of an image sensing apparatus as claimed in claim 9, wherein said solid-state image sensing element is of interline type.
